(19) Europäisches Patentamt / European Patent Office / Office européen des brevets

(11) **EP 2 278 688 A1**

(12) **EUROPEAN PATENT APPLICATION**

(43) Date of publication:
26.01.2011 Bulletin 2011/04

(51) Int Cl.:
*H02K 3/30* (2006.01)  *H02K 3/40* (2006.01)
*H01B 17/36* (2006.01)

(21) Application number: 10169914.8

(22) Date of filing: 16.07.2010

(84) Designated Contracting States:
AL AT BE BG CH CY CZ DE DK EE ES FI FR GB GR HR HU IE IS IT LI LT LU LV MC MK MT NL NO PL PT RO SE SI SK SM TR
Designated Extension States:
BA ME RS

(30) Priority: 24.07.2009 US 508811

(71) Applicant: General Electric Company
Schenectady, NY 12345 (US)

(72) Inventors:
• Asokan, Thangavelu
560037, Karnataka (IN)
• Das, Subhankar
560066, Bangalore, Karnataka (IN)
• Bohori, Adnan Kutubuddin
560037, Karnataka (IN)

(74) Representative: Illingworth-Law, William Illingworth
Global Patent Operation - Europe
GE International Inc.
15 John Adam Street
London WC2N 6LU (GB)

(54) **Insulating compositions and devices incorporating the same**

(57) Provided are compositions that include a dielectric matrix material (222) defining multiple voids (224) of substantially uniform respective dimension and configured as a substantially uniform array. The voids may be configured such that charges that accumulate at surfaces of at least some of the voids when the composition is immersed in a uniform external electric field interact with charges that accumulate at surfaces of at least others of the voids to cause movement of the respective charges in a direction having a component transverse to the electric field. Hollow particles (226) may be disposed within respective voids of the array of voids defined by the matrix material. Associated devices are also provided.

*Fig. 2*

EP 2 278 688 A1

## Description

BACKGROUND

The invention relates generally to insulating compositions, and in particular to insulating compositions for use in high voltage devices.

Conventional insulation used in products such as motors and generators typically include several components, such as enamel, tapes, and resin. As such, conventional insulation tends to be a complicated system. Further, each of the constituent components is expected to exhibit different electrical, thermal, and mechanical properties, making overall insulation performance difficult to predict.

One of the major performance parameters is being monitored is the partial discharge magnitude. Partial discharges largely tend to occur at structural defects such as voids, delaminations, and cracks in the insulation. The partial discharges in these defects are caused by the lower dielectric constant at the defects due to the presence of air, compared to that of the surrounding solid insulation materials. The lower dielectric constant leads to a higher impedance and voltage in the localized defect region, and hence leads to partial discharges. Consequences of such partial discharges include changes in the chemistry due to oxidation or carbonization and subsequently treeing, cracking, and eventual catastrophic failure of the insulation.

BRIEF DESCRIPTION

In one aspect, a composition is provided that includes a dielectric matrix material, such as, for example, a thermoplastic, a thermoset, or an elastomer, defining multiple voids (*e.g.*, substantially spherical voids, substantially spheroidal voids, substantially ovoidal voids, and/or substantially egg-shaped voids) of substantially uniform respective dimension and configured as a substantially uniform array (*e.g.*, having a level of uniformity of at least one on the Morishita index). The voids may be configured such that charges that accumulate at surfaces of at least some of the voids when the composition is immersed in a uniform external electric field interact with charges that accumulate at surfaces of at least others of the voids to cause movement of the respective charges in a direction having a component transverse to the electric field. The spacing of adjacent voids can be less than or equal to an average diameter of the voids, which average diameter may be about 100 $\mu$m or less.

In some embodiments, hollow particles may be disposed within respective voids of the array of voids defined by the matrix material. For example, the hollow particles may be hollow spheres of glass, polymer, aluminum oxide, silicon dioxide, titanium dioxide, and/or zinc oxide. In other embodiments, particles, such as, for example, ceramic, varistor (*e.g.*, doped ZnO or doped $TiO_2$), and/or inorganic dielectric particles, may be incorporated within the matrix material.

For a composition in which the matrix material incorporates varistor particles, the concentration of varistor particles can be configured such that, when the composition is immersed in a uniform external electric field of increasing strength, an electric field through the matrix material reaches a transition field strength for the varistor particles prior to an electric field across any one of voids reaching a strength sufficient to induce electric discharge across the void. The varistor particles can be incorporated within the matrix material at a concentration that is less than or equal to about five weight percent of said varistor particles and said matrix material.

In another aspect, a device, such as a high voltage device (*e.g.*, an electrical generator or an electric motor) is provided. The device can include first and second conductive components (*e.g.*, respectively, a phase conductor and a ground or phase conductor) configured to be maintained at different potentials. An insulation layer may be disposed between said first and second conductive components. The insulation layer can include a dielectric matrix material defining multiple voids of substantially uniform respective dimension and configured as a substantially uniform array. The device voids can be configured as a substantially uniform array having a close-packed direction that is oblique relative to an electric field established by and extending between the first and second conductive components.

In some embodiments, hollow particles may be disposed within respective voids of the array of voids defined by the matrix material. In other embodiments, particles, such as ceramic, varistor, and/or inorganic dielectric particles, may be incorporated within the matrix material.

DRAWINGS

These and other features, aspects, and advantages of the present invention will become better understood when the following detailed description is read with reference to the accompanying drawings in which like characters represent like parts throughout the drawings, wherein:

Fig. 1 is a magnified side view of a portion of a high voltage system configured in accordance with an example embodiment, showing an insulation layer between a phase conductor and a ground conductor;

Fig. 2 is a magnified side view of the region labeled "2" in Fig. 1;

Fig. 3 is a magnified perspective sectioned view of the region labeled "3" in Fig. 2;

Fig. 4 is a magnified perspective view of a portion of the insulation layer depicted in Fig. 2, the matrix material being transparent to reveal a unit cell of voids;

Fig. 5 is a side view of the unit cell of Fig. 4;

Fig. 6 is a side view of a high voltage device configured in accordance with another example embodiment;

Fig. 7 is a magnified side view of the region labeled "7" in Fig. 6;

Fig. 8 is a magnified perspective sectioned view of the region labeled "8" in Fig. 7;

Fig. 9 is a magnified perspective view of a portion of the insulation layer depicted in Fig. 7, the matrix material being transparent to reveal a unit cell of voids;

Fig. 10 is a side view of the unit cell of Fig. 9;

Fig. 11 is a schematic side view of an insulation layer including an isolated void and subjected to an external electric field;

Fig. 12 is a schematic side view of an insulation layer including an array of voids and subjected to an external electric field; and

Fig. 13 is a sectioned perspective view of an insulation layer configured in accordance with another example embodiment.

DETAILED DESCRIPTION

Example embodiments of the present invention are described below in detail with reference to the accompanying drawings, where the same reference numerals denote the same parts throughout the drawings. Some of these embodiments may address some of the above and other needs.

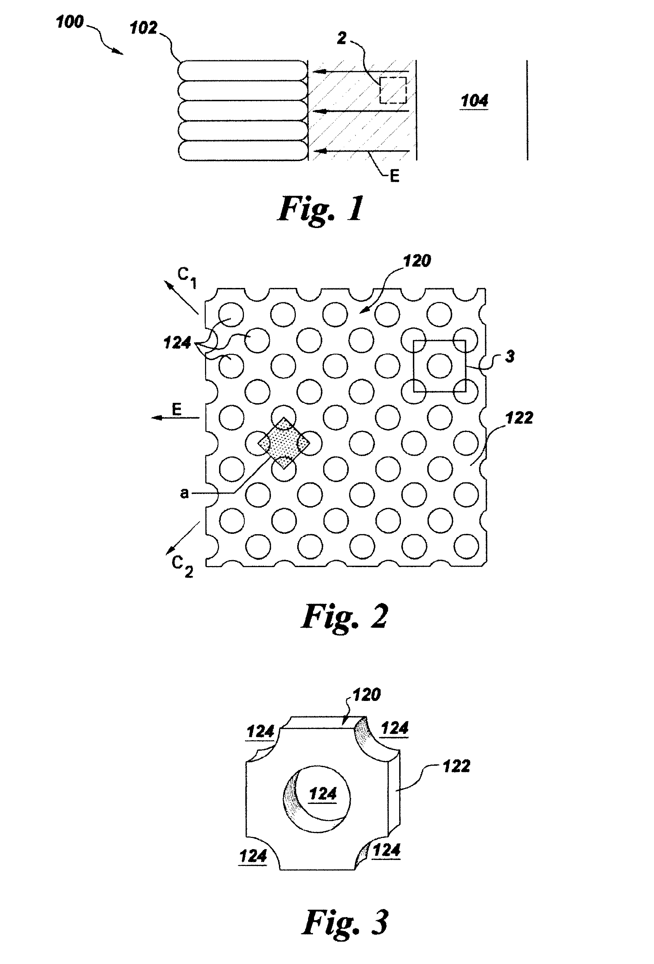

Referring to Fig. 1, therein is shown a portion of an electrical system 100 configured in accordance with an example embodiment. The system 100 can include a first conductive component, such as a phase conductor 102, and a second conductive component, such as a ground conductor 104. The phase conductor 102 can connect to a high voltage supply. During operation of the generator 100, the phase conductor 102 and the ground conductor 104 can be maintained at different potentials. For example, the phase conductor 102 may be held at a high voltage through the operation of the excitation source, while the ground conductor 104 may be held at ground potential. As such, an electric field E may be established between the phase conductor 102 and the ground conductor 104.

Referring to Figs. 1 and 2, an insulation layer 120 can be disposed between the 102 and 104, thereby providing some amount of electrical isolation between the two. During operation of the generator 100, the electric field E established by the 102 and 104 can extend across the insulation layer 120. The insulation layer 120 may include a matrix 122 formed at least partially of dielectric material. For example, the dielectric matrix material may include a thermoset (*e.g.*, epoxy, polyester resin, and/or the like), a thermoplastic (*e.g.*, the polycarbonate resin marketed by SABIC Innovative Plastics (Pittsfield, MA) under the trademark LEXAN), an elastomer (*e.g.*, silicone), and/or a blend or composite of the above.

Referring to Figs. 2-5, the matrix 122 may define multiple voids 124 therein, the voids being of substantially uniform respective dimension. For example, the matrix 122 may incorporate an aerogel or a xerogel. The voids 124 may be substantially spherical and may all have diameters $d$ of about 100 $\mu$m (say, $\pm 10$ %), or may substantially uniformly have diameters of some dimension less than 100 $\mu$m, say, on the order of 10 $\mu$m or 1 $\mu$m. In other embodiments, the voids 124 may be substantially spheroidal, ovoidal, egg-shaped, and/or the like. Voids of other shapes may also be possible. Further, the voids 124 can be configured as a substantially uniform array. The array may be of any of a variety of ordered arrangements, and may, for example, consist of the spatial repetition of a unit cell $u$ that is cubic (as shown in Fig. 3), tetragonal, orthorhombic, monoclinic, triclinic, hexagonal, or rhombohedral. The matrix 122 can define the voids 124 such that the level of uniformity of the void array is at least one on the Morishita index.

Regardless of the type of symmetry generally exhibited by the array of voids, the array may have a "close-packed direction" along which the voids 124 are most closely spaced. For some arrangements of the voids 124 (*e.g.,* the arrangement of Figs. 2-5), the resulting array may possess several close-packed directions $c_1, c_2$. The spacing $s$ of adjacent voids 124 along the close-packed directions $c_1, c_2$ can be less than or equal to an average diameter of the voids (*i.e.,* $s \leq d$). In some embodiments, the spacing $s$ may be significantly smaller than the void diameter $d$; for example, $s$ may be equal to about $0.3d$ or less.

The insulation layer 120 can be configured such that, when disposed between 102 and 104, the void array is oriented with at least one of the close-packed directions $c_1, c_2$ oblique relative to the direction of the electric field $E$ established by and extending between 102 and 104. This can be done, for example, by ensuring that the void array is appropriately oriented with respect to the outer contours of the insulation layer 120. As will be discussed further below, configuring the void array such that a close-packed direction thereof is oblique relative to the electric field passing through the insulation and void array may prove useful in some situations. In some embodiment, the close-packed direction may be oriented at an angle of 45 degrees or less with respect to the direction of the electric field E.

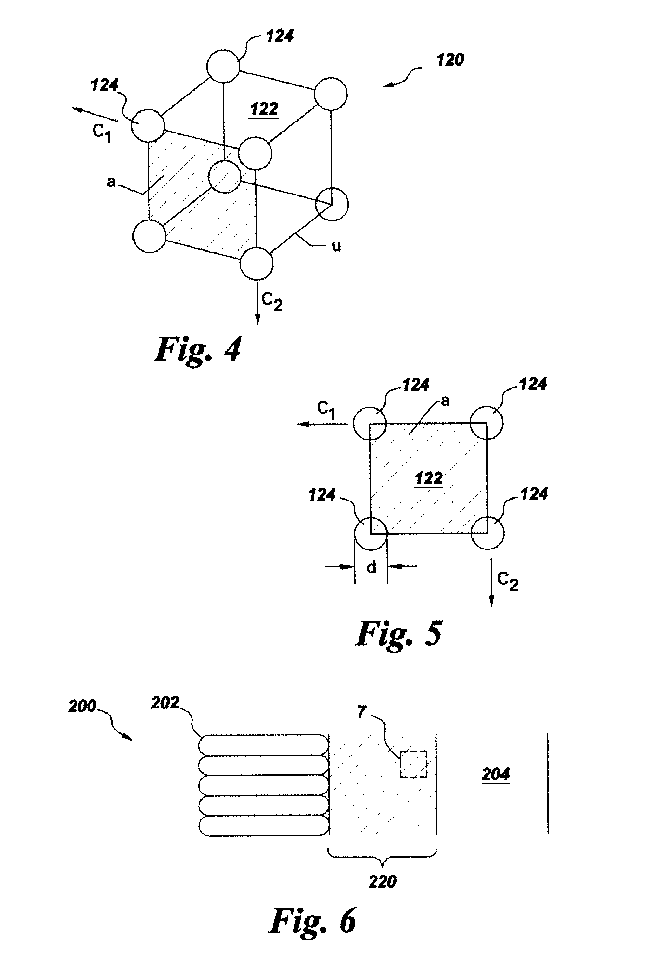

Referring to Figs. 6-10, in another embodiment of an electrical system 200, an insulation layer 220 may be disposed between a phase conductor 202 and another phase conductor 204. The phase conductors 202 and 204 can be configured to be held at different electric potentials during operation, such that an electric field extends between the two and across the insulation layer 220. The insulation layer 220 may include hollow particles, such as hollow spheres 226, that are disposed within respective voids 224, such that each void 224 includes a hollow sphere 226. The voids 224 can have respective diameters $d$, and the spheres 226 can have respective outer diameters $d_s$ that are about equal to $d$, such that the unoccupied space associated with each void is essentially defined by an interior or hollow portion of the sphere (*i.e.,* the spatial region that is not occupied by solid material is disposed essentially entirely within the sphere). The hollow spheres 226 may have a thickness $t$ that is significantly less than the diameter $d$ of the voids 224. Therefore, whether or not the voids 224 contain hollow spheres 226, the effective diameter of the voids may remain essentially the same, that is, d. The hollow particles/spheres 226 may be electrically non-conductive, and may be cenospheres, such as glass microspheres, in which case the insulation layer 220 may be considered a variety of syntactic foam. In other embodiments, the hollow particles may be made at least partially of polymer (*e.g.*, a phenolic), aluminum oxide, silicon dioxide, titanium dioxide, and/or zinc oxide.

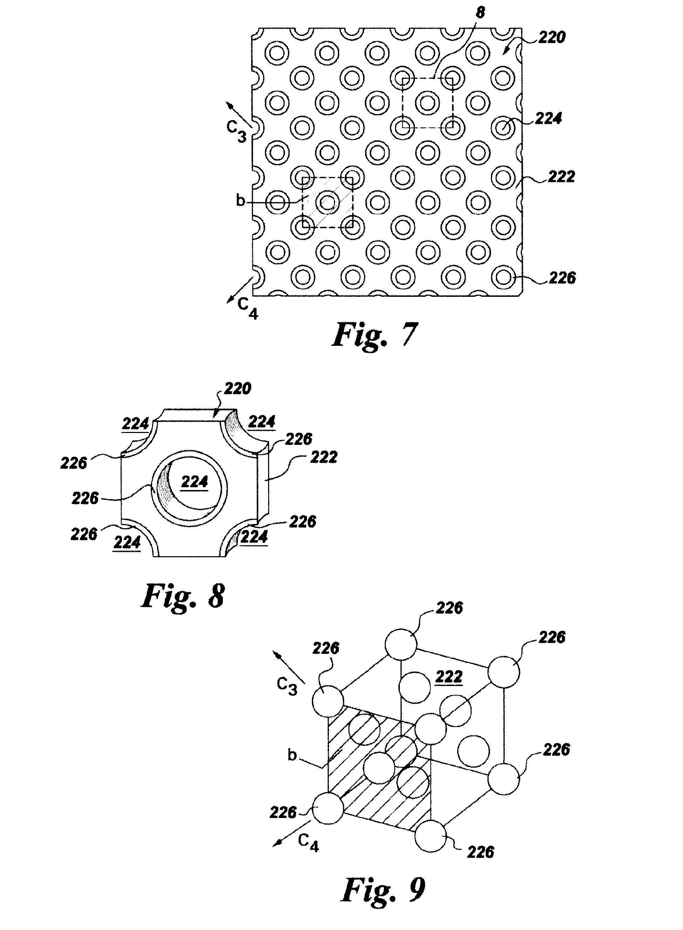

The voids 224 can be configured as a substantially uniform array having one or more close-packed directions. For example, the voids 224 may be arranged in a face-centered cubic pattern, as shown in Fig. 9, with close-packed directions $c_3$, $c_4$. Again, the spacing $s$ of adjacent voids 224 along the close-packed directions $c_3$, $c_4$ may be less than or equal to an average diameter $d$ of the voids, and at least one of the close-packed directions $c_3$, $c_4$ may be oblique relative to the direction of the electric field established by and extending between 202 and 204.

Applicants have observed that an insulation layer configured as described above (*e.g.*, the insulation layer 220 of Fig. 6) may tend to exhibit an enhanced resistance to the occurrence of partial discharges within the insulation. Specifically, Applicants have observed that, for insulation having about 15 % (by volume) cenospheres incorporated within a matrix of dielectric material, where the cenospheres are arranged as a substantially uniform array having a close-packed direction oriented obliquely relative to an electric field extending across the insulation, the voltage drop across the insulation layer required to initiate the onset of partial discharges is increased by more than 50 % with respect to an insulation layer composed of the same dielectric material but lacking the void array.

Without wishing to be held to any particular theory, Applicants postulate that the definition within the dielectric matrix material of a uniform array of appropriately spaced voids allows for interactions of the induced charges that otherwise naturally accumulate at the surfaces of the voids under the influence of an external electric field.

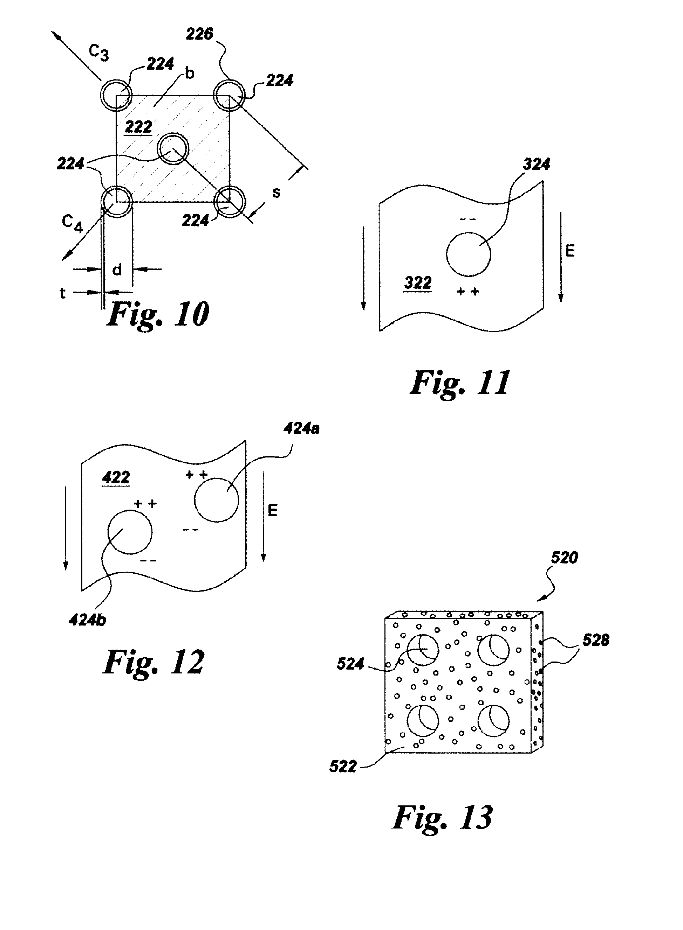

Specifically, referring to Fig. 11, for an isolated spherical void 324 in a dielectric matrix 322 subjected to an external electric field E, opposing charges are expected to respectively accumulate at opposing ends of the void. This arrangement of charges results in a maximum local electric field being disposed across the void 324, which can ultimately lead to electrical breakdown of the space within the void, for example, due to ionization of the gas particles in the void. It is noted that isolated voids as in Fig. 11 are expected to be found randomly throughout an insulation layer in the absence of complicated and expensive insulation manufacturing processes aimed at their exclusion.

Referring to Fig. 12, instead of an isolated void, a dielectric matrix 422 may contain a substantially uniform array of voids, including voids 424a, 424b. Again, when the matrix 422 is immersed in an electric field E, charges will accumulate around the voids 424a, 424b. If the voids 424a, 424b are sufficiently proximal (*e.g.*, spacing $s \leq$ void diameter $d$), the charges associated with one void 424a can interact with the charges associated with a neighboring void 424b. As a result, the charges may shift with respect to the voids 424a, 424b as each set of charges is attracted towards the other. (A "shift" in the charges in this case means movement of the charges relative to the distribution expected around an isolated void of similar size and shape.) This spatial redistribution of charges can lead to a reduction of the strength of the local electric fields across the voids 424a, 424b, with a corresponding increase in the strength of the local electric field extending through the matrix 422 between the voids. In light of the greater breakdown strength typically exhibited by solid dielectric materials, this can lead to a greater overall resistance to partial discharge in the matrix-void composite insulation.

It is noted that for an idealized arrangement of voids in which void size and spacing is perfectly uniform, the above described charge redistribution may not be expected to take place. Instead, the forces acting on a set of charges due to charges around a neighboring void could, in some cases, be exactly balanced by opposing forces exerted by charges located around a void disposed in an opposite direction. However, in reality, neither the size nor the spacing of the voids will be perfectly uniform, but instead will demonstrate some level of natural/statistical variation. The use of the term "substantially uniform" in the above descriptions of the void size and spacing is meant to be representative of this natural variability.

Referring to Fig. 13, therein is shown a slice of insulation material 520 configured in accordance with another example embodiment. The insulation material 520 includes a matrix material 522, which may be composed at least partially of a dielectric. The matrix 522 can define a plurality of voids 524 arranged so as to form a substantially uniform array. The matrix 522 may incorporate therein particles 528, which particles may tend to enhance the thermal and/or electrical performance of the matrix. For example, at least some of the particles 528 may include a ceramic or inorganic dielectric material, which may enhance the thermal conductivity of the matrix 522.

In some embodiments, the matrix 522 may incorporate particles 528 that include varistor material, such as doped zinc oxide and/or doped titanium oxide (TiO$_2$). The varistor particles 528 may have a current (I$_{VAR}$)-voltage (V) behavior that is non-linear and described by the equation

$$\mathrm{I}_{\mathrm{VAR}} = k \cdot V^{\alpha}$$

where $\alpha$ is a material-dependent non-linearity index that is in the range of 10 to 40 and $k$ is a material-dependent proportionality constant. Where $\alpha \geq 10$ (*e.g.,* doped ZnO or doped TiO$_2$), the varistor particles 528 would therefore tend to be relatively non-electrically conductive when subjected to voltages and electric field strengths below a threshold voltage/field strength defined by the material, and would be relatively electrically conductive above the threshold. The electric field strength at which the transition in conductive behavior occurs is referred to as the "transition field strength." For many materials, the transition field strength will actually be a range of strengths over which the behavior changes from non-conducting to conducting.

The concentration and material of the varistor particles 528 can be configured such that, when the insulation material 520 is immersed in a uniform external electric field of increasing strength, the local electric field through the matrix material 522 reaches the transition field strength for the varistor particles 528 prior to the local electric field across any of the voids 524 reaching a strength sufficient to induce a partial discharge. For example, if the electrical stress necessary to initiate partial discharges is 3 kV mm$^{-1}$, and this electrical stress is found when the voltage drop across the insulation layer is 300 V for a 100 $\mu$m insulation thickness, the concentration of varistor particles 528 may be selected such that a voltage of 300 V results in a current density of 1 mA cm$^{-2}$ or more being conducted through the particles. In that way, a leakage current through the matrix 522 may be induced to alleviate charge accumulation, this having less deleterious effects than a partial discharge event. In some embodiments, the concentration of varistor particles 528 incorporated within the matrix material 522 can be less than or equal to about five weight percent of the aggregate.

One process for producing an insulation material configured in accordance with an example embodiment (*e.g.*, the insulation material 220 of Figs. 6-10) is now presented. First, granules of polycarbonate resin can be mixed manually with a selected quantity of hollow microspheres. The relative amounts of resin and hollow microspheres can be selected so as to produce an aggregate insulation material with an average hollow sphere concentration/spacing as discussed above. The mixture of resin granules and hollow spheres can then be placed in a furnace at 120 °C for 1-2 hours in order to facilitate the removal of any trapped moisture. The mixture can then be passed through an extruder while heating the mixture up to temperatures of 220-270°C, thereby drawing a wire of 2-4 mm diameter and composed of hollow spheres within a continuous resin matrix. The mixture may be passed through the extruder multiple times, which may serve to increase the uniformity of the distribution of hollow spheres within the resin matrix. The wire thus drawn can then be chopped into smaller granules, which can be dried at 120 °C for 2-5 hours. Finally, the chopped granules can be used in an injection molding process, which injection molding can be done at a pressure of 16,000-20,000 psi and a temperature of 240-270 °C.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects of the present invention are defined in the following numbered clauses:

1. A composition comprising:

   a dielectric matrix material defining multiple voids of substantially uniform respective dimension and configured as a substantially uniform array.

2. The composition of Clause 1, wherein the voids are configured such that charges that accumulate at surfaces of at least some of the voids when said composition is immersed in a uniform external electric field interact with charges that accumulate at surfaces of at least others of the voids to cause movement of the respective charges in a direction having a component transverse to the electric field.

3. The composition of Clause 1 or Clause 2, wherein the array of voids defined by said matrix material includes at least one of substantially spherical voids, substantially spheroidal voids, substantially ovoidal voids, or substantially egg-shaped voids.

4. The composition of any preceding Clause, wherein said dielectric matrix material includes at least one of a thermoplastic, a thermoset, or an elastomer.

5. The composition of any preceding Clause, wherein a spacing of adjacent voids is less than or equal to an average diameter of the voids.

6. The composition of any preceding Clause, wherein the voids have respective diameters of about 100 μm or less.

7. The composition of any preceding Clause, further comprising hollow particles disposed within respective voids of the array of voids defined by said matrix material.

8. The composition of Clause 7, wherein said hollow particles include hollow spheres of glass, polymer, aluminum oxide, silicon dioxide, titanium dioxide, or zinc.

9. The composition of any preceding Clause, further comprising particles incorporated within said matrix material.

10. The composition of Clause 9, wherein at least some of said particles respectively include a material selected from the group consisting of a ceramic, a varistor, and an inorganic dielectric.

11. The composition of any preceding Clause, further comprising varistor particles incorporated within said matrix material.

12. The composition of Clause 11, wherein a concentration of said varistor particles is configured such that, when said composition is immersed in a uniform external electric field of increasing strength, an electric field through said matrix material reaches a transition field strength for said varistor particles prior to an electric field across any one of the array of voids reaching a strength sufficient to induce electric discharge across the one of the array of voids.

13. The composition of Clause 11 or Clause 12, wherein said varistor particles are incorporated within said matrix material at a concentration that is less than or equal to about five weight percent.

14. The composition of any of Clauses 11 to 13, wherein said varistor particles include particles including a material selected from the group consisting of doped ZnO and doped $TiO_2$.

15. The composition of any preceding Clause, wherein said dielectric matrix material defines multiple voids configured as an array having a level of uniformity of at least one on the Morishita index.

16. A device comprising:

first and second conductive components configured to be maintained at different potentials; and an insulation layer disposed between said first and second conductive components and including

a dielectric matrix material defining multiple voids of substantially uniform respective dimension and configured as a substantially uniform array.

17. The device of Clause 16, wherein the voids are configured as a substantially uniform array having a close-packed direction that is oblique relative to an electric field established by and extending between said first and second conductive components.

18. The device of Clause 16 or Clause 17, wherein the array of voids defined by said matrix material includes at least one of substantially spherical voids, substantially spheroidal voids, substantially ovoidal voids, or substantially egg-shaped voids.

19. The device of any of Clauses 16 to 18, wherein said first conductive component includes a phase conductor and said second component includes one of a phase conductor or a ground conductor.

20. The device of any of Clauses 16 to 19, wherein said dielectric includes at least one of a thermoset, thermoplastic, or an elastomer.

21. The device of any of Clauses 16 to 20, wherein a spacing of adjacent voids is less than or equal to an average diameter of the voids.

22. The device of any of Clauses 16 to 21, wherein the voids have respective diameters of about 100 μm or less.

23. The device of any of Clauses 16 to 22, further comprising hollow particles disposed within respective voids of the array of voids defined by said matrix material.

24. The device of Clause 23, wherein said hollow particles include hollow glass spheres.

25. The device of any of Clauses 16 to 24, further comprising particles incorporated within said matrix material.

26. The device of Clause 25, wherein at least some of said particles respectively include a material selected from the group consisting of a ceramic, a varistor, and an inorganic dielectric.

27. The device of any of Clauses 16 to 26, wherein said insulation layer further includes varistor particles incorporated within said matrix material.

28. The device of Clause 27, wherein a concentration of said varistor particles is configured such that, when said insulation layer is immersed in an electric field of increasing strength established by said first and second conductive components, an electric field through said matrix material reaches a transition field strength for said varistor particles prior to an electric field across any one of the array of voids reaching a strength sufficient to induce electric discharge across the one of the array of voids.

29. The device of Clause 27 or Clause 28, wherein said varistor particles are incorporated within said matrix material at a concentration that is less than or equal to about five weight percent.

30. The device of any of Clauses 27 to 29, wherein said varistor particles include particles including a material selected from the group consisting of doped ZnO and doped $TiO_2$.

31. The device of any of Clauses 16 to 30, wherein said dielectric matrix material defines multiple voids configured as an array having a level of uniformity of at least one on the Morishita index.

**Claims**

1. A device comprising:

   first and second conductive components (102, 104) configured to be maintained at different potentials; and
   an insulation layer (120) disposed between said first and second conductive components and including
   a dielectric matrix material (122) defining multiple voids (124) of substantially uniform respective dimension and configured as a substantially uniform array.

2. The device of Claim 1, wherein the voids (124) are configured as a substantially uniform array having a close-packed direction that is oblique relative to an electric field established by and extending between said first and second conductive components (102, 104).

3. The device of Claim 1 or Claim 2, wherein the array of voids (124) defined by said matrix material (122) includes at least one of substantially spherical voids, substantially spheroidal voids, substantially ovoidal voids, or substantially egg-shaped voids.

4. The device of any preceding Claim, wherein said first conductive component (102) includes a phase conductor and said second component (104) includes one of a phase conductor or a ground conductor.

5. The device of any preceding Claim, wherein said dielectric (122) includes at least one of a thermoset, thermoplastic, or an elastomer.

6. The device of any preceding Claim, wherein a spacing of adjacent voids (124) is less than or equal to an average diameter of the voids.

7. The device of any preceding Claim, wherein the voids (124) have respective diameters of about 100 μm or less.

8. The device of any preceding Claim, further comprising hollow particles (226) disposed within respective voids (224) of the array of voids defined by said matrix material (222).

9. The device of Claim 8, wherein said hollow particles (226) include hollow glass spheres.

10. The device of any preceding Claim, further comprising particles (528) incorporated within said matrix material (522).

11. The device of Claim 10, wherein at least some of said particles (528) respectively include a material selected from the group consisting of a ceramic, a varistor, and an inorganic dielectric.

12. The device of any preceding Claim, wherein said insulation layer (520) further includes varistor particles (528) incorporated within said matrix material (522).

13. The device of Claim 12, wherein a concentration of said varistor particles (528) is configured such that, when said insulation layer (520) is immersed in an electric field of increasing strength established by said first and second conductive components (102, 104), an electric field through said matrix material (522) reaches a transition field strength for said varistor particles prior to an electric field across any one of the array of voids (524) reaching a strength sufficient to induce electric discharge across the one of the array of voids.

14. The device of Claim 12 or Claim 13, wherein said varistor particles (528) are incorporated within said matrix material (522) at a concentration that is less than or equal to about five weight percent.

15. The device of any of Claims 12 to 14, wherein said varistor particles (528) include particles including a material selected from the group consisting of doped ZnO and doped $TiO_2$.

16. The device of any preceding Claim, wherein said dielectric matrix material (122) defines multiple voids configured as an array having a level of uniformity of at least one on the Morishita index.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

Europäisches
Patentamt

European
Patent Office

Office européen
des brevets

## EUROPEAN SEARCH REPORT

Application Number

EP 10 16 9914

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 219 791 A (MOORE CURTIS L [US] ET AL) 26 August 1980 (1980-08-26) | 1,4,5, 7-9 | INV. H02K3/30 |
| Y | * column 3, line 7 - line 41 * | 10-15 | H02K3/40 H01B17/36 |
| Y | DE 195 25 692 A1 (ABB RESEARCH LTD [CH]) 16 January 1997 (1997-01-16) * claims 1,2,10; figure 4 * | 10-15 | |
| X | JP 1 293509 A (HITACHI LTD) 27 November 1989 (1989-11-27) * abstract; figures * | 1,4,5, 7-10 | |
| X | JP 63 228606 A (HITACHI LTD) 22 September 1988 (1988-09-22) * abstract; figures * | 1,4,5,8 | |
| X | DE 20 2004 011700 U1 (SWOBODA GMBH GEB [DE]) 30 September 2004 (2004-09-30) * claims; figures * | 1,4,5 | |
| X | FR 2 588 996 A2 (PIOCH RENE [FR]) 24 April 1987 (1987-04-24) * claim 5; figures 1,4 * | 1,4,5,8, 9 | TECHNICAL FIELDS SEARCHED (IPC) |
| A | EP 1 736 998 A1 (ABB RESEARCH LTD [CH]) 27 December 2006 (2006-12-27) * abstract * * paragraph [0005] - paragraph [0006] * | 11-15 | H02K H01B H01F |

The present search report has been drawn up for all claims

| Place of search | Date of completion of the search | Examiner |
|---|---|---|
| The Hague | 3 December 2010 | Zanichelli, Franco |

EPO FORM 1503 03.82 (P04C01)

## ANNEX TO THE EUROPEAN SEARCH REPORT
## ON EUROPEAN PATENT APPLICATION NO.

EP 10 16 9914

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2010

| Patent document cited in search report | | Publication date | Patent family member(s) | | Publication date |
|---|---|---|---|---|---|
| US 4219791 | A | 26-08-1980 | AU | 530718 B2 | 28-07-1983 |
| | | | AU | 5296479 A | 29-05-1980 |
| | | | BR | 7907579 A | 05-08-1980 |
| | | | CA | 1138544 A1 | 28-12-1982 |
| | | | DE | 2945515 A1 | 04-06-1980 |
| | | | ES | 8102407 A1 | 01-04-1981 |
| | | | FR | 2442498 A1 | 20-06-1980 |
| | | | IN | 152592 A1 | 18-02-1984 |
| | | | IT | 1124485 B | 07-05-1986 |
| | | | JP | 55075207 A | 06-06-1980 |
| | | | MX | 147391 A | 26-11-1982 |
| | | | NO | 793744 A | 28-05-1980 |
| | | | SE | 7909680 A | 25-05-1980 |
| DE 19525692 | A1 | 16-01-1997 | CN | 1148541 A | 30-04-1997 |
| | | | EP | 0755058 A2 | 22-01-1997 |
| | | | JP | 4190595 B2 | 03-12-2008 |
| | | | JP | 9048874 A | 18-02-1997 |
| | | | US | 5925467 A | 20-07-1999 |
| JP 1293509 | A | 27-11-1989 | JP | 2749323 B2 | 13-05-1998 |
| JP 63228606 | A | 22-09-1988 | NONE | | |
| DE 202004011700 | U1 | 30-09-2004 | NONE | | |
| FR 2588996 | A2 | 24-04-1987 | NONE | | |
| EP 1736998 | A1 | 27-12-2006 | AT | 438184 T | 15-08-2009 |
| | | | WO | 2006136040 A1 | 28-12-2006 |
| | | | CN | 101203921 A | 18-06-2008 |
| | | | EP | 1894211 A1 | 05-03-2008 |
| | | | JP | 2008544455 T | 04-12-2008 |
| | | | US | 2008152898 A1 | 26-06-2008 |

EPO FORM P0459

For more details about this annex : see Official Journal of the European Patent Office, No. 12/82